# EUROPEAN PATENT APPLICATION

(11) **EP 4 339 312 A1**
(43) Date of publication of application: **20.03.2024**
(21) Application number: 22876481.7
(22) Date of filing: 29.09.2022
(51) Int. Cl.: C22B 3/10, B09B 3/70, C22B 1/02, C22B 3/16, C22B 7/00, C22B 26/12, H01M 10/54

(54) **METHOD FOR DISSOLVING BATTERY POWDER IN HYDROCHLORIC ACID**

(30) Priority: 30.09.2021 JP 2021161135
(71) Applicant: Asaka Riken Co., Ltd., Koriyama-shi, Fukushima 963-0725 (JP)
(72) Inventor: YAMADA, Keita, Koriyama-shi, Fukushima 963-0725 (JP); SAKUMA, Yukio, Koriyama-shi, Fukushima 963-0725 (JP); HIRAOKA, Taro, Koriyama-shi, Fukushima 963-0725 (JP); NAKAZAWA, Jun, Koriyama-shi, Fukushima 963-0725 (JP); INOUE, Hiroto, Koriyama-shi, Fukushima 963-0725 (JP)
(74) Representative: Schön, Christoph
(86) International application number: PCT/JP2022/036529
(87) International publication number: WO 2023/054618

(57) **Abstract**

Provided is a method for dissolving battery powder in hydrochloric acid, comprising excellent workability, in which a large amount of the battery powder can be dissolved in hydrochloric acid in a single treatment. The method for dissolving battery powder in hydrochloric acid according to the present invention includes: stirring battery powder containing valuable metals obtained from waste lithium batteries in hydrochloric acid with a concentration of 50 to 150 g/L at a mass ratio of 250 to 1000% relative to hydrogen chloride in the hydrochloric acid to provide a hydrochloric acid suspension of the battery powder; and adding a predetermined amount of hydrochloric acid to the hydrochloric acid suspension to set the concentration of hydrochloric acid in the hydrochloric acid suspension to 150 to 350 g/L, and then adjusting and stirring the hydrochloric acid suspension such that the proportion of battery powder in the hydrochloric acid suspension to a mass ratio of 50 to 200% relative to hydrogen chloride in the hydrochloric acid suspension to provide a hydrochloric acid solution of the battery powder.

## Description

### Technical Field

The present invention relates to a method for dissolving battery powder in hydrochloric acid.

### Background Art

In recent years, with the spread of lithium ion batteries, there have been investigated methods for recovering valuable metals such as lithium, manganese, nickel, and cobalt from waste lithium ion batteries and reusing them as positive electrode active materials for the lithium ion batteries.

Conventionally, to recover the valuable metal from the waste lithium ion battery, powder containing the valuable metal (hereinafter referred to as battery powder) is obtained by heat treatment (roasting), or crushing or classifying without heat treatment of the waste lithium ion battery, and then is dissolved in hydrochloric acid to leach the valuable metal with hydrochloric acid, and the obtained leaching solution is subjected to solvent extraction (for example, refer to Patent Literature 1).

### Citation List

### Patent Literature

Patent Literature 1: Japanese Patent No. 4865745

### Summary of Invention

### Technical Problem

The method described in Patent Literature 1 has the disadvantage of a small amount of the battery powder that can be dissolved in hydrochloric acid by a single treatment, resulting in difficulty in workability.

An object of the present invention is to provide a method for dissolving battery powder in hydrochloric acid, the method providing a larger amount of the battery powder that can be dissolved in hydrochloric acid in a single treatment than the method described in Patent Literature 1 and comprising excellent workability.

### Solution to Problem

In order to achieve the object, the method for dissolving battery powder in hydrochloric acid according to the present invention is a method for dissolving battery powder in hydrochloric acid, in which battery powder containing valuable metals obtained from waste lithium batteries is dissolved in hydrochloric acid, the method comprising: a step of supplying the battery powder to hydrochloric acid with a concentration in a range of 50 to 150 g/L at a mass ratio in a range of 250 to 1000% relative to pure hydrogen chloride in the hydrochloric acid, and stirring to provide a hydrochloric acid suspension of the battery powder; and a step of adding a predetermined amount of hydrochloric acid to the hydrochloric acid suspension to set a concentration of hydrochloric acid in the hydrochloric acid suspension to a range of 150 to 350 g/L, and then adjusting and stirring the hydrochloric acid suspension such that the battery powder in the hydrochloric acid suspension has a mass ratio of a range of 50 to 200% relative to hydrogen chloride in the hydrochloric acid suspension to provide a hydrochloric acid solution of the battery powder.

In the step of providing the hydrochloric acid suspension of the battery powder (suspension step), the mass ratio of battery powder to hydrogen chloride in the hydrochloric acid suspension is more than 1000%, whereby the battery powder is hardly suspended. The mass ratio of battery powder to hydrogen chloride is less than 250%, whereby chlorine gas is easily generated from the hydrochloric acid suspension.

In the step of providing a hydrochloric acid solution of the battery powder (dissolution step), the mass ratio of battery powder to hydrogen chloride in the hydrochloric acid suspension and the hydrochloric acid solution is more than 200%, whereby valuable metals in the battery powder cannot be dissolved. In the dissolution step, the mass ratio of battery powder to hydrogen chloride is less than 50%, thereby providing the disadvantage of an increase in the amount of base required for neutralization due to an excessive amount of hydrochloric acid remaining after the dissolution reaction of the hydrochloric acid solution.

In the method for dissolving battery powder in hydrochloric acid according to the present invention, first, the battery powder is supplied to hydrochloric acid having a concentration of 50 to 150 g/L at a mass ratio of 250 to 1000% to hydrogen chloride in the hydrochloric acid to form a hydrochloric acid suspension. Then, a predetermined amount of hydrochloric acid is added to the hydrochloric acid suspension to set the concentration of hydrochloric acid in the hydrochloric acid suspension to the range of 150 to 350 g/L, and the mass ratio of battery powder to hydrogen chloride in the hydrochloric acid suspension is adjusted to be in the range of 50 to 200%, thereby providing a hydrochloric acid solution of the battery powder. As a result, the method for dissolving hydrochloric acid according to the present invention can increase the amount of battery powder that can be dissolved in hydrochloric acid by a single treatment as compared with the method described in Patent Literature 1. In addition, the dissolution reaction can be controlled by creating the suspension under mild conditions and then adding concentrated hydrochloric acid.

The method for dissolving battery powder in hydrochloric acid according to the present invention preferably comprises: a step of continuously supplying a predetermined amount of hydrochloric acid and a predetermined amount of the battery powder to a suspension tank having a predetermined volume, suspending the battery powder in hydrochloric acid with a concentration of the range of 50 to 150 g/L at a mass ratio of 250 to 1000% relative to hydrogen chloride in the hydrochloric acid to provide a first hydrochloric acid suspension of the battery powder; a step of continuously supplying the first hydrochloric acid suspension of the battery powder to continuous dissolution tanks configured by disposing a plurality of dissolution tanks each having a predetermined volume in series, continuously charging hydrochloric acid into at least one of the continuous dissolution tanks to set the concentration of hydrochloric acid in the hydrochloric acid suspension to the range of 150 to 350 g/L, and adjusting the mass ratio of the battery powder to hydrogen chloride in the hydrochloric acid suspension to a ratio in the range of 50 to 200% to provide a second hydrochloric acid suspension of the battery powder; and a step of sequentially transferring the second hydrochloric acid suspension of the battery powder from the most upstream tank of the continuous dissolution tanks to the downstream tanks to provide a hydrochloric acid solution of the battery powder.

With such a configuration, the second hydrochloric acid suspension is stirred while being sequentially transferred from the most upstream tank of the continuous dissolution tanks to the downstream tanks, and dissolution progresses efficiently and the battery powder can be continuously treated without stopping the reaction.

The method for dissolving battery powder in hydrochloric acid according to the present invention preferably further includes a first roasting step of roasting the battery powder at 300°C or more together with at least one selected from the group consisting of hydrogen and carbon monoxide.

The method for dissolving battery powder in hydrochloric acid according to the present invention preferably further includes a second roasting step of roasting the battery powder together with carbon at 600°C or more. The carbon may be optionally added, or may be carbon originally contained in the battery powder.

The method for dissolving battery powder in hydrochloric acid according to the present invention preferably further includes a third roasting step of roasting the battery powder together with aluminum at 650°C or more. The aluminum may be added optionally, or may be aluminum originally contained in the battery powder. If the method for dissolving battery powder in hydrochloric acid according to the present invention includes any one of the first to third roasting steps, the amount of chlorine gas generated in the step of providing a hydrochloric acid solution of the battery powder can be further reduced.

Preferably, in the method for dissolving battery powder in hydrochloric acid according to the present invention, in the step of providing the hydrochloric acid suspension of the battery powder or the step of providing the hydrochloric acid solution, hydrogen generated by dissolving aluminum in an acid is added and utilized as a reducing gas in any of the first to third roasting steps. If necessary, the chlorine gas generated in the step of providing the hydrochloric acid suspension or the step of providing the hydrochloric acid solution of the battery powder is removed with a scrubber, and if hydrogen is used in any of the first to third roasting steps, the amount of chlorine gas generated in the step of providing the hydrochloric acid solution of the battery powder can be further reduced.

The method for dissolving battery powder in hydrochloric acid according to the present invention preferably further includes a step of adding carbon or aluminum to at least one selected from the group consisting of the hydrochloric acid suspension of the battery powder and the hydrochloric acid solution. If carbon or aluminum is originally contained in the battery powder, or if carbon or aluminum is additionally added to at least one selected from the group consisting of the step of providing a hydrochloric acid solution and the hydrochloric acid solution and is present in the hydrochloric acid solution of the battery powder, the amount of chlorine gas generated in the step of providing the hydrochloric acid solution of the battery powder can be further reduced.

### Brief Description of Drawings

FIG. 1 shows a flowchart of a method for dissolving battery powder in hydrochloric acid according to the present invention.
FIG. 2 shows a system configuration diagram of an example of an apparatus configuration used in the method of dissolving battery powder in hydrochloric acid according to the present invention.

### Description of Embodiments

Then, embodiments of the present invention will be described in more detail with reference to the accompanying drawings.

The method for dissolving battery powder in hydrochloric acid according to the present embodiment is a method for dissolving powder containing valuable metals obtained from waste lithium ion batteries (battery powder) in hydrochloric acid.

In the method for dissolving battery powder in hydrochloric acid according to the present embodiment, the above-described waste lithium ion battery means an used lithium ion battery that has reached the end of the lifespan as battery products, a lithium ion battery that was discarded as a defective product during the production step, a remaining positive electrode material used in the production step for commercialization, and the like.

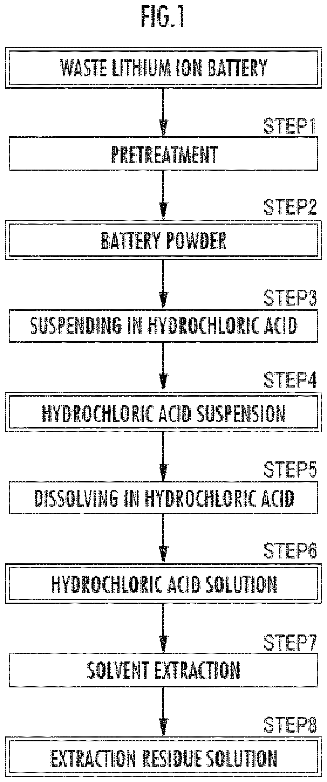

In the method for dissolving battery powder in hydrochloric acid according to the present embodiment, as shown in FIG. 1, the waste lithium ion battery is pretreated in STEP 1. In the pretreatment, if the waste lithium ion battery is an used lithium ion battery whose life as a battery product has expired, a discharge treatment is first performed to discharge all remaining charges. Then, the casing of the waste lithium ion battery is provided with an opening portion, and then is heated (roasted) at a temperature in the range of 100 to 450°C, for example. The heat treatment is performed, or no heat treatment is performed, the waste lithium ion battery is crushed with a crusher such as a hammer mill or a jaw crusher, and the casing, current collector, and the like constituting the waste lithium ion battery are removed by sieving (classification) to allow providing battery powder in STEP 2 as powder containing valuable metals.

Alternatively, the discharged waste lithium ion battery is crushed with the crusher, the casing, current collector, and the like are removed by sieving, and then heat treatment is performed at a temperature in the above range, whereby the battery powder may be obtained.

If the waste lithium ion battery is the remaining positive electrode material and the like used for commercialization in the production step, the discharge treatment and the formation of the opening portion are not performed, the battery is heat treated at a temperature within the range described above, then crushed with the crusher, and the current collector and the like are removed by sieving, whereby the battery powder (positive electrode powder) may be obtained, or the battery is crushed with the crusher, the current collector is removed by sieving, and then heat treatment is performed at a temperature within the above range, whereby the battery powder may be obtained.

The battery powder may be roasted at 300°C or more together with at least one selected from the group consisting of hydrogen and carbon monoxide (first roasting step), may be roasted together with carbon at 600°C or more (second roasting step), and may be roasted together with aluminum at 650°C or more (third roasting step).

In the method for dissolving battery powder in hydrochloric acid according to the present embodiment, the battery powder is suspended in hydrochloric acid in STEP 3 to provide a hydrochloric acid suspension in STEP 4. Carbon or aluminum may be added to the hydrochloric acid suspension. Then, in STEP 5, hydrochloric acid is added to the hydrochloric acid suspension, and the battery powder contained in the hydrochloric acid suspension is dissolved in hydrochloric acid, thereby allowing to provide a hydrochloric acid solution of the battery powder. Carbon or aluminum may be added to the hydrochloric acid solution. In at least one selected from the group consisting of STEP 3 and STEP 5, hydrogen generated during acid dissolution of metallic aluminum derived from aluminum foil that is a component of the battery or added to the suspension is separated from chlorine gas by a scrubber if necessary, and can be added and utilized as a reducing gas in any of the first to third roasting steps.

The hydrochloric acid solution is neutralized, and then manganese, cobalt, and nickel among the valuable metals are sequentially extracted with a solvent in STEP 7. In STEP 8, a lithium salt aqueous solution can be obtained as the extraction residue. The lithium salt aqueous solution is reacted with carbon dioxide gas or a carbonate compound, thereby allowing to provide lithium carbonate.

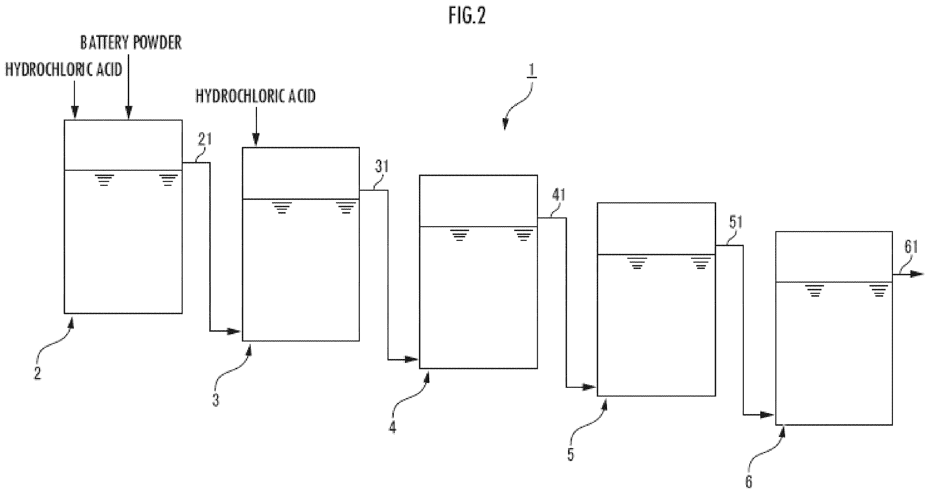

The method for dissolving battery powder in hydrochloric acid according to the present embodiment is a method for dissolving in hydrochloric acid including steps of STEPs 3 to 6, and can be performed with, for example, the hydrochloric acid apparatus for dissolution 1 shown in FIG. 2.

The hydrochloric acid apparatus for dissolution 1 comprises a suspension tank 2 in which battery powder obtained from a waste lithium ion battery is suspended in hydrochloric acid to provide a hydrochloric acid suspension of the battery powder, and a plurality of dissolution tanks 3, 4, 5, and 6 disposed in series in which the battery powder is dissolved in hydrochloric acid having a higher concentration than the hydrochloric acid contained in the hydrochloric acid suspension. In the present embodiment, the plurality of dissolution tanks 3, 4, 5, and 6 disposed in series are referred to as continuous dissolution tanks. Although the continuous dissolution tanks comprise four dissolution tanks in FIG. 2, the total number of continuous dissolution tanks is not limited. From the viewpoint of equipment costs and the like, it is realistic to comprise preferably 2 to 6 dissolution tanks, more preferably 2 to 5 dissolution tanks, and still more preferably 3 to 5 dissolution tanks.

Hydrochloric acid and battery powder are supplied to the suspension tank 2.

In the continuous dissolution tanks, dissolution tanks 3, 4, 5, and 6 are disposed in series in a stepped manner in order from the upstream side, with the suspension tank 2 side being the upstream side.

Hydrochloric acid may be supplied to the dissolution tank 3. Further, hydrochloric acid may be supplied to each of the dissolution tanks 4 to 6, which will be described later. However, hydrochloric acid is supplied to at least one of the dissolution tanks 3 to 6.

The suspension tank 2 comprises a take-out pipe for hydrochloric acid suspension 21 configured to take out the hydrochloric acid solution of the battery powder as overflow from the liquid surface in the suspension tank 2, and the take-out pipe for suspension 21 is connected to the adjacent dissolution tank 3. On the other hand, the dissolution tanks 3, 4, and 5 comprise take-out pipes for hydrochloric acid suspension 31, 41, and 51 configured to take out the hydrochloric acid suspension of the battery powder as overflow from the liquid surface in the dissolution tanks 3, 4, and 5, respectively, and the take-out pipes for suspension 34, 43, and 53 are connected to the lower portions of the adjacent dissolution tanks 4, 5, and 6, respectively. The dissolution tank 6 comprises a take-out pipe for hydrochloric acid solution 61 configured to take out the hydrochloric acid solution of the battery powder as overflow from the liquid surface in the dissolution tank 6.

Then, a method for dissolving battery powder in hydrochloric acid according to the present embodiment with the hydrochloric acid apparatus for dissolution 1 will be described.

In the hydrochloric acid apparatus for dissolution 1, first, while hydrochloric acid with a concentration in the range of 50 to 150 g/L, for example 117 g/L, is continuously supplied to the 5 L suspension tank 2 at a flow rate in the range of 2.5 to 10 L/hour, in one example, a flow rate of 5 L/hour, the battery powder obtained in STEP 2 is continuously supplied to the suspension tank 2 at a supply rate in the range of 1 to 2 kg/hour, for example, 1.6 kg/hour. As a result, the suspension tank 2 can provide a first hydrochloric acid suspension of the battery powder in which the battery powder was suspended in hydrochloric acid with a concentration in the range from 50 to 150 g/L, for example 117 g/L, at a mass ratio in the range from 250 to 1000%, for example 270%, relative to hydrogen chloride in the hydrochloric acid.

In this case, if hydrochloric acid is continuously supplied at a flow rate within the above range, for example, a flow rate of 5 L/hour, and the battery powder is continuously supplied at a supply rate within the above range, for example, 1.6 kg/hour, the suspension tank 2 has a capacity that becomes full in one hour, for example. As a result, if the suspension tank 2 is empty, after a period of time within the above range, for example, one hour after the start of the supply of the hydrochloric acid and battery powder, the first hydrochloric acid suspension is supplied to the adjacent dissolution tank 3 by overflowing through the take-out pipe for suspension 21. In addition, for the first hydrochloric acid suspension, even if the first hydrochloric acid suspension remains in the suspension tank 2 after the previous treatment, after a period of time within the above range, for example, one hour after the start of the supply of the hydrochloric acid and battery powder, the remaining first hydrochloric acid suspension is replaced with a new first hydrochloric acid suspension, and the new first hydrochloric acid suspension is supplied to the adjacent dissolution tank 3 through the take-out pipe for suspension 21.

To the dissolution tank 3, hydrochloric acid with a higher concentration than the hydrochloric acid supplied to the suspension tank 2, for example, 35% by mass (410 g/L), may be continuously supplied, for example, at a flow rate in the range of 3 to 10 L/hour, in one specific example, 5 L/hour. As a result, for example, in the 10 L dissolution tank 3, the battery powder is suspended in hydrochloric acid with a concentration in the range of 150 to 350 g/L, for example 270 g/L, in a mass ratio of 50 to 200%, for example 60%, relative to hydrogen chloride in the hydrochloric acid, allowing to provide a second hydrochloric acid suspension of the battery powder.

In this case, if the first hydrochloric acid suspension is continuously supplied from the take-out pipe for suspension 21 at a flow rate of, for example, 5 L/hour, and hydrochloric acid is continuously supplied at a flow rate in the above range, for example, a flow rate of 5 L/hour, the dissolution tank 3 comprises a capacity that becomes full in, for example, one hour (10 L in the example). As a result, if the dissolution tank 3 is empty, the second hydrochloric acid suspension overflows after a period of time within the above range, for example, one hour, from the start of the supply of the first hydrochloric acid suspension and hydrochloric acid. In addition, for the second hydrochloric acid suspension, even if the second hydrochloric acid suspension remains in the dissolution tank 3 after the previous treatment, after a period of time within the above range, for example one hour, from the start of the supply of the first hydrochloric acid suspension and hydrochloric acid, the remaining second hydrochloric acid suspension is replaced with a new second hydrochloric acid suspension, and the new second hydrochloric acid suspension overflows. The overflowing second hydrochloric acid suspension is supplied to the adjacent dissolution tank 4 through the take-out pipe for suspension 31. In this time, if the second hydrochloric acid suspension is continuously supplied from the take-out pipe for suspension 31 at a flow rate in the range of 2.5 to 10 L/hour, for example, at a flow rate of 5 L/hour, the dissolution tank 4 has a capacity that becomes full in a time range of 0.5 to 1.5 hours, for example, one hour. As a result, if the dissolution tank 4 is empty, the second hydrochloric acid suspension overflows after a period of time within the above range, for example, one hour, from the start of supply of the second hydrochloric acid suspension. In addition, for the second hydrochloric acid suspension, even if the second hydrochloric acid suspension remains in the dissolution tank 4 after the previous treatment, after a period of time within the above range, for example one hour, from the start of the supply of the second hydrochloric acid suspension, the remaining second hydrochloric acid suspension is replaced with a new second hydrochloric acid suspension, and the new second hydrochloric acid suspension overflows. The overflowing second hydrochloric acid suspension is supplied to the adjacent dissolution tank 5 through the take-out pipe for suspension 41.

The dissolution tank 5 comprises exactly the same configuration as the dissolution tank 4, and the new second hydrochloric acid suspension overflows after a period of time within the above range, for example, one hour after the start of the supply of the second hydrochloric acid suspension. The overflowing second hydrochloric acid suspension is supplied to the adjacent dissolution tank 6 through the take-out pipe for suspension 51.

The dissolution tank 6 comprises exactly the same configuration as the dissolution tanks 4 and 5, and the new second hydrochloric acid suspension overflows after a period of time within the above range, for example, one hour after the start of the supply of the second hydrochloric acid suspension. The overflowing second hydrochloric acid suspension is a hydrochloric acid solution (solution in hydrochloric acid) of the battery powder in which substantially all of the valuable metals in the battery powder are dissolved in hydrochloric acid, and the hydrochloric acid solution is taken out through a take-out pipe for solution 61. In the take-out pipe 61, which is an outlet from the continuous dissolution tanks, the elution rates of cobalt, nickel, manganese, and lithium contained in the battery powder into the solution are all 98% or more.

In the hydrochloric acid apparatus for dissolution 1, hydrochloric acid is further added in the dissolution tank 3 to the first suspension obtained in the suspension tank 2 to allow providing the second suspension, and the second suspension is sequentially transferred through the dissolution tanks 3, 4, 5, and 6 disposed in the series of the continuous dissolution tanks for a period of time ranging from 2 to 6 hours. Further, each of the dissolution tanks 3, 4, 5, and 6 is configured to overflow to the next tank through the respective take-out pipes for solution. Therefore, the second suspension can be stirred while sufficiently retaining in each of the dissolution tanks 3, 4, 5, and 6, and can be dissolved as much as possible in hydrochloric acid in a single treatment. Therefore, the amount of the battery powder is larger than that in the method described in Patent Literature 1, and excellent workability can be obtained.

### Reference Signs List

- 2: Suspension tank
- 3, 4, 5, 6: Dissolution tank
- 21, 31, 41, 51, 61: Take-out pipe for solution

## Claims

1. A method for dissolving battery powder in hydrochloric acid, in which battery powder containing valuable metals obtained from waste lithium batteries is dissolved in hydrochloric acid, the method comprising:
a step of supplying the battery powder to hydrochloric acid with a concentration in a range of 50 to 150 g/L at a mass ratio in a range of 250 to 1000% relative to hydrogen chloride in the hydrochloric acid, and stirring to provide a hydrochloric acid suspension of the battery powder; and
a step of adding a predetermined amount of hydrochloric acid to the hydrochloric acid suspension to set a concentration of hydrochloric acid in the hydrochloric acid suspension to a range of 150 to 350 g/L, and then adjusting and stirring the hydrochloric acid suspension such that the battery powder in the hydrochloric acid suspension has a mass ratio of a range of 50 to 200% relative to hydrogen chloride in the hydrochloric acid suspension to provide a hydrochloric acid solution of the battery powder.

2. The method for dissolving battery powder in hydrochloric acid according to claim 1, wherein
a step of continuously supplying a predetermined amount of hydrochloric acid and a predetermined amount of the battery powder to a suspension tank having a predetermined volume, suspending the battery powder in hydrochloric acid with a concentration of a range of 50 to 150 g/L at a mass ratio of 250 to 1000% relative to hydrogen chloride in the hydrochloric acid to provide a first hydrochloric acid suspension of the battery powder;
a step of continuously supplying, from the suspension tank, the first hydrochloric acid suspension of the battery powder to continuous dissolution tanks configured by disposing a plurality of dissolution tanks each having a predetermined volume in series, continuously supplying hydrochloric acid into the continuous dissolution tanks to set a concentration of hydrochloric acid in the hydrochloric acid suspension to a range of 150 to 350 g/L, and adjusting a mass ratio of the battery powder to hydrogen chloride in the hydrochloric acid suspension to a ratio in a range of 50 to 200% to provide a second hydrochloric acid suspension of the battery powder; and
a step of sequentially transferring the second hydrochloric acid suspension of the battery powder from a most upstream tank of the continuous dissolution tanks to downstream tanks to provide a hydrochloric acid solution of the battery powder.

3. The method for dissolving battery powder in hydrochloric acid according to claim 1, further comprising
a first roasting step of roasting the battery powder at 300°C or more together with at least one selected from a group consisting of hydrogen and carbon monoxide.

4. The method for dissolving battery powder in hydrochloric acid according to claim 1, further comprising
a second roasting step of roasting the battery powder together with carbon at 600°C or more.

5. The method for dissolving battery powder in hydrochloric acid according to claim 1, further comprising
a third roasting step of roasting the battery powder together with aluminum at 650°C or more.

6. The method for dissolving battery powder in hydrochloric acid according to any one of claims 3 to 5, wherein
hydrogen generated in at least one step, which is selected from a group consisting of the step of providing the hydrochloric acid suspension of the battery powder and the step of providing the hydrochloric acid solution, is added and utilized as a reducing gas in any of the first to third roasting steps.

7. The method for dissolving battery powder in hydrochloric acid according to any one of claims 1 to 5, further comprising
a step of adding carbon to at least one selected from a group consisting of the hydrochloric acid suspension of the battery powder and the hydrochloric acid solution.

8. The method for dissolving battery powder in hydrochloric acid according to claim 6, further comprising
a step of adding carbon to at least one selected from a group consisting of the hydrochloric acid suspension of the battery powder and the hydrochloric acid solution.

9. The method for dissolving battery powder in hydrochloric acid according to any one of claims 1 to 5, further comprising
a step of adding aluminum to at least one selected from a group consisting of the hydrochloric acid suspension of the battery powder and the hydrochloric acid solution.

10. The method for dissolving battery powder in hydrochloric acid according to claim 6, further comprising
a step of adding aluminum to at least one selected from a group consisting of the hydrochloric acid suspension of the battery powder and the hydrochloric acid solution.

11. The method for dissolving battery powder in hydrochloric acid according to claim 7, further comprising
a step of adding aluminum to at least one selected from a group consisting of the hydrochloric acid suspension of the battery powder and the hydrochloric acid solution.

12. The method for dissolving battery powder in hydrochloric acid according to claim 8, further comprising
a step of adding aluminum to at least one selected from a group consisting of the hydrochloric acid suspension of the battery powder and the hydrochloric acid solution.
